# NEW EUROPEAN PATENT SPECIFICATION

(11) **EP 1 972 825 B2**
(45) Date of publication and mention of the opposition decision: **27.12.2017**
(45) Mention of the grant of the patent: 12.10.2011
(21) Application number: 07104598.3
(22) Date of filing: 21.03.2007
(51) Int. Cl.: F16D 65/56, F16D 55/00

(54) **Disc brake**
Scheibenbremse
Frein à disque

(43) Date of publication of application: 24.09.2008
(73) Proprietor: Haldex Brake Products AB, 261 24 Landskrona (SE)
(72) Inventor: Sandberg, Stefan, 23435, Lomma (SE)
(74) Representative: Habermann, Hruschka & Schnabel

(56) References cited:
- DE-A1- 4 212 389
- DE-A1- 10 260 597
- DE-A1- 10 322 834
- DE-A1- 10 330 633
- FR-A1- 2 493 441
- GB-A- 1 204 376
- GB-A- 1 356 226
- GB-A- 2 064 031
- US-A- 4 699 253

## Description

### Technical Field

The present invention concerns disc brakes, which normally either have a fixed caliper or a sliding caliper, which embeds one or more brake discs. The present invention is mainly intended for, but not limited to, spot-type disc brakes, in which the brake pads only are to act on a restricted part of a full circle. In particular, the invention relates to disc brakes comprising brake actuation mechanisms of the so-called tappet design.

### Prior Art

Irrespective of the actuation mechanism applied in such disc brakes, a clearance adjustment is provided in order to take up the slack at the brake pad due to wear during the brake actuation. The brake actuation mechanism comprises at least one thrust element which transfers the clamping force deriving from a lever or similar to at least one brake disc via brake pads. For enabling such clearance adjustment, the thrust element comprises at least one rotatable element which cooperates with an element in order to provide some relative motion or displacement between these elements, whereas the latter element is non-rotatably guided during brake actuation and release.

In particular, but not exclusively, the invention refers to disc brakes embodying so-called single or double tappet application mechanisms, as, for instance, disclosed in German patent DE 102 60 597 B4 of the applicant. The application mechanism substantially comprises two sleeves or spindles which are co-axially arranged in threaded engagement. The outer sleeve comprises an inner thread into which an inner sleeve is rotatably guided by its outer thread. The outer sleeve is non-rotatably guided in the caliper or the carrier so that rotation of the inner sleeve will cause a linear displacement of the outer sleeve relative to the inner sleeve towards the brake disc for adjusting the wear-induced clearance which is present at the brake pads.

The guidance of the outer sleeve in a non-rotatable, linear manner in the axial direction of the brake disc may be realized in that the outer sleeve contacts directly or indirectly the brake pad or the corresponding pad holder, which themselves are linearly guided in the caliper or the carrier supporting the caliper. In other words, due to the fact that the brake pad or its holder is guided in axial direction towards and away from the brake disc, also the outer sleeve of the thrust element of the brake actuation mechanism is non-rotatably guided thereby.

Usually, the outer sleeve of a tappet design or any element of a brake actuation mechanism, which constitutes the front part being in contact with the inner brake pad or its pad holder for transferring the braking force, is detachably connected via a pressure plate or similar with this brake pad or its holder, since the brake pad or its holder must be exchangeable so as to enable replacement of worn brake pads during maintenance if necessary.

During such pad replacements or other service actions, the brake pads are getting removed, the caliper is getting dismounted from the carrier or the vehicle or components of the disc brake are getting dissembled. Under such circumstances it could happen that the brake actuation mechanism, irrespective of its actual design, is suddenly free to move within the caliper with some or all of its components relative to each other and relative to the caliper housing. This may result in damages.

In particular, when taking the tappet design as mentioned above, once the connection between the outer sleeve and the brake pad is becoming disintegrated during service handlings, the outer sleeve is free to rotate.

Excessive rotations of the outer sleeve may seriously damage the threads, sealings or other components of the application mechanism. For instance, if the tappet mechanism is manually operated during this servicing, when the guidance of the outer sleeve by the brake pad or its holder has lost its function, such manual operation may be blocked or the manual operation may not change the position of the entire adjustment mechanism, which usually forms part of the brake actuation mechanism, as desired. The position of the adjustment mechanism, for example, has to be reset after worn brake pads have been removed and new pads have been inserted into the caliper or carrier.

FR 2 493 441 discloses a disc brake according to the preamble of claim 1 in which it has means which prevent rotation between the pressure plate and a thrust rod. Once the pressure plate is disassembled, the thrust rod can rotate freely. As an alternative means could be provided at the brake disc-side end of the thrust rod which cooperate with the caliper which serve as linear guidance for the thrust rod.

Accordingly, it is the object of the invention to realize a disc brake which can provide easy replacement of the brake pads and other maintenance handlings at the disc brake without the risk of harming the brake actuation mechanism and components of it by manual or any other interference.

### Summary of the Invention

This object is solved by a disc brake according to claim 1 and 3.

In general, the brake actuation mechanism with the thrust element can be of any design, arrangement and configuration, as long as the element which is cooperating with the at least one rotatable element for clearance adjustment is non-rotatable guided during the process of brake actuation and release on the one hand and as long as said non-rotatable guidance of the element will be disintegrated or abandoned in its functional entirety when the disc brake or components of it become dismounted for servicing or other maintenance measures on the other hand.

In other words, if the means to non-rotatably guide the element cooperating with the rotatable element have lost their function, the means according to the invention to interfere with the relative motion between these elements become active at the latest.

However, these means shall not be limited to the afore-mentioned functionality. According to a preferred embodiment of the invention, the means can be further configured and arranged to be also able to non-rotatably guide the element cooperating with the rotatable element during brake actuation and release. This might become applicable in designs of the brake actuation mechanism in which the brake pad or pad holder per se are not able to non-rotatably guide the element in question. In such an embodiment, the means serve both as the means to limit rotation of the element upon completed or partial disassembly of the disc brake and upon brake actuation and release in the working position of the disc brake.

Preferably, the means are configured in such a way so that the limitation of the rotation of the front element of the thrust element is realized up to a defined threshold torque, which may depend on the chosen design of the brake actuation mechanism. Alternatively, the means are configured so as to allow a certain rotational slack. Both the defined threshold torque and the defined rotational slack maintain some manual operational freedom which may be needed for some specific repair handlings.

In one preferred embodiment, the means to interfere with the relative motion between the elements comprise a protection bellow.

The bellow, which serves as a protection of the inside of the caliper housing and the brake actuation mechanism against dirt and abrasive particles from the brake disc and pad lining, may be arranged between the element cooperating with the rotatable element and the caliper.

In order to provide the necessary limitation of the rotation on the one hand and/or the non-rotatable guidance on the other hand, the protection bellow according to the invention is reinforced. Such reinforcement is realized by the inclusion of fibres made of any suitable material such as metal, carbon or polymers into the material of the bellow. The desired threshold torque or the defined slack can be realized in that the overall torsion elasticity and rolling elasticity in linear axial direction is defined adequately by the incorporation of the reinforcing elements and their orientations.

In another embodiment of the present invention, the means are configured as interfering elements, surfaces, geometries etc..

For that purpose the pressure plate comprises at least one element which cooperates with at least one element arranged at the caliper or a carrier supporting the caliper. Such elements are in general guidance elements attached to and arranged at the pressure plate with which the element cooperating with the rotatable element is contacting the brake pad or the pad holder and guidance elements arranged at the caliper or the carrier, respectively.

The pressure plate can be integrally formed with the front end of the element facing the brake disc, e.g. the outer sleeve, or it can be a separate, detachably element secured to the front end of it.

Since the guidance element of the pressure plate is slideably guided by the guidance element of the caliper or the carrier supporting the caliper, inevitably the front element of the brake actuation mechanism will be guided in a non-rotatably manner relative to the caliper housing as well. In addition, since the guidance elements are configured to only enable linear sliding in the axial direction of the brake disc, these guidance elements also serve to limit any rotation of the front element when the pressure plate is not in force transmitting contact with the brake pad or the pad holder during service.

In one embodiment, the guidance element of the pressure plate is configured as a pin which protrudes from the pressure plate in a direction opposite of the brake disc but co-axially thereto. The pin is further adapted to be received in a corresponding guidance bore or linear axial recess which is arranged in the caliper or the carrier supporting the caliper.

In another embodiment, the guidance element of the pressure plate could be also made as a tubular element which also protrudes from the pressure plate in a direction opposite of the brake disc but co-axially thereto. The tubular element is going to be received on a corresponding pin which protrudes, preferably in an opening, from the caliper or its carrier, towards the pressure plate.

In order to provide some minor rotational partial movements of the front element relative to the rotatable element, the arrangement of a pin slideably guided in a bore and the arrangement of a tubular element slideably guided on a pin, respectively, could comprise a defined clearance.

One advantage of the afore-mentioned simplified design of a combination made of a pin and a tubular element, which are slideably engaged relatively to each other, is due to the fact that either the pin or the tubular element could be used as a reference body for a pad wear sensor, since during brake actuation and release the pressure plate is moving with the front element which cooperates with the rotatable element for clearance adjustment. Thus, for sensing the actually present wear, the distance covered by the pressure plate during its linear movements, provides the necessary information to determine such actual wear. Alternatively, the pin or the tubular element could be used as a support for mounting such a reference body of a pad wear sensor.

In another preferred embodiment, the pressure element comprises at least one bar extending laterally from the pressure plate, which bar comprises a guiding surface which is adapted to be guided on a counter guiding surface of the caliper or of the carrier.

Preferably, such bars are arranged so as to radially oppose each other which prevents any rotation of the pressure plate and thus of the front element which cooperates with the rotatable element of the brake actuation mechanism. The bars could be formed integrally with the pressure plate.

The means to interfere with the relative motion of the front element of the brake actuation mechanism and the rotatable element cooperating therewith for clearance adjustment under certain conditions reduce the risk of damages of the brake actuation mechanism, since excessive rotational movements of the front element are prevented or at least limited to a certain threshold torque or rotational angle.

Furthermore, since these means are further configured to provide axial linear guidance of the corresponding elements, the risk of blocking of the single elements is reduced or even cleared during manually induced rotations, e.g. during resetting of the adjustment mechanism during replacement of the brake pads.

One crucial advantage of the means according to the invention is based on the fact that the means could be used together with or even form part of a pad wear sensor, but still maintaining a very simple and therefore reliable design.

Further objects and advantages of the present invention will be obvious for a person skilled in the art when reading the detailed description below of preferred embodiments.

### Brief Description of the Drawings

The invention will be explained further below by way of examples and with reference to the enclosed drawings. In the drawings:
Fig. 1 is a perspective view in cross section of a first embodiment of the disc brake according to the invention;
Fig. 2 is a plain view in cross section of the embodiment of Fig. 1;
Fig. 3a is a schematic view of a second embodiment of the disc brake according to the invention;
Fig. 3b is a schematic view of the embodiment of Fig. 3a with some clearance between the guidance elements;
Fig. 4 is another schematic view of a third embodiment of the disc brake according to the invention; and
Fig. 5 is another perspective view in cross section of a fourth embodiment of the disc brake according to the invention.

### Detailed Description of Preferred Embodiments

As used in this description the expressions "axial", "radial" and "rotational" are in relation to a wheel axle associated with the disc brake and to the brake disc.

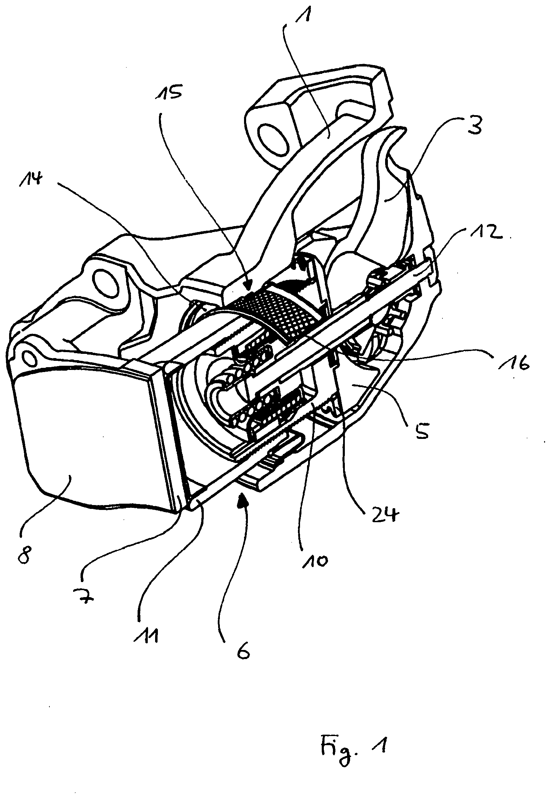

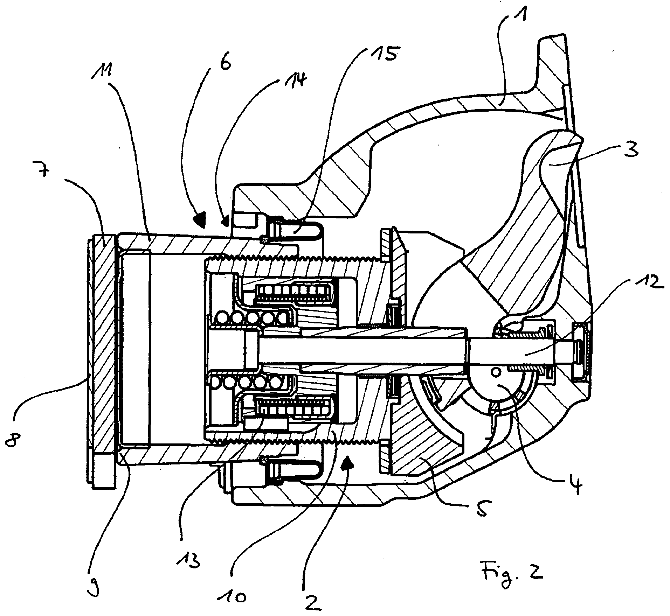

In Figs. 1 and 2, schematically, the actuation part of a disc brake in a first embodiment according to the invention is shown.

The disc brake basically comprises a caliper 1, of which only the part containing a brake actuation mechanism 2 is shown. In case of a sliding caliper, the caliper will be guided on a carrier (not shown) which supports the caliper.

The caliper 1 houses the brake actuation mechanism 2, which, in the embodiment shown, comprises a lever 3, which can be actuated by a hydraulic or pneumatic piston (not shown) and which is supported against the rear part of the caliper 1 so as to be rotatable around a roller body 4. On the opposite side, the lever 3 is supported against a pressure piece 5 in an eccentric manner. As commonly known, by the eccentric support, when the lever 3 is rotating, the pressure piece 5 will be displaced axially towards the brake disc in order to transfer the braking or clamping force during brake actuation.

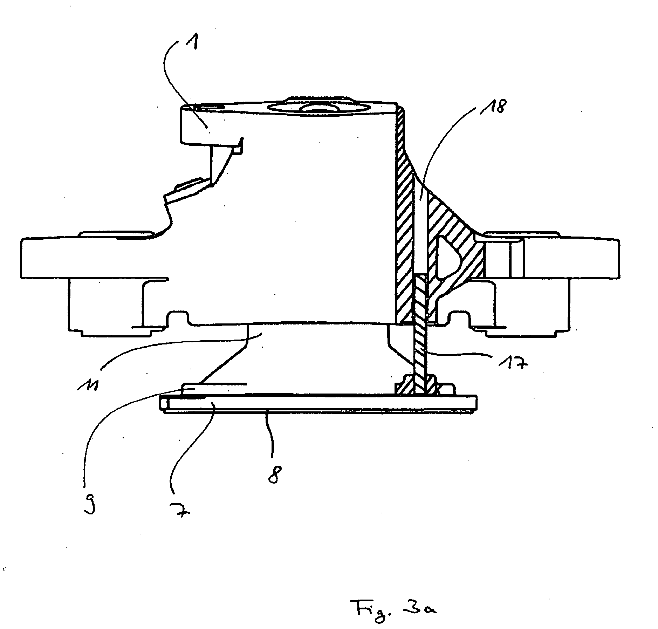

The pressure piece 5 is abutting against a thrust element 6, which transfers the braking force from the lever arrangement to a pad holder 7 of an inner brake pad 8 by means of a pressure plate 9 (see e.g. Fig. 3a).

The thrust element 6 comprises a rotatable element, an inner sleeve 10, and an element, an outer sleeve 11, cooperating with the inner sleeve 10.

As can be seen, the inner sleeve 10 is in threaded engagement with the outer sleeve 11. The inner sleeve 10 is adapted to be set into rotation by the lever 4 by means of a further sleeve on a central rod 12, which is rotatably arranged in the caliper 1 and which serves as the means to mount the brake actuation mechanism 2 in the caliper 1. Via a clutch 13 that rotation is transferred to the inner sleeve 10.

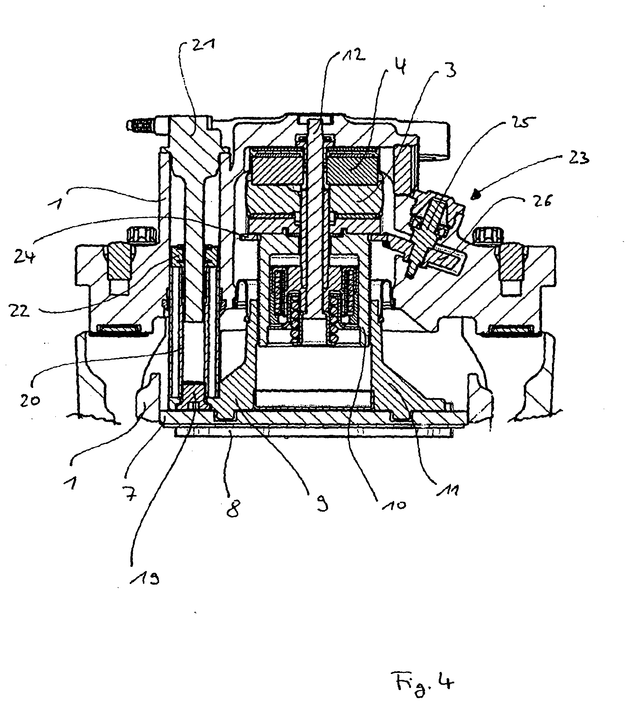

The outer sleeve 11 is guided in the caliper 1 during the axial displacement of the thrust element 6 exclusively during braking and release in a non-rotatably manner. Such guidance can be realized by the connection of the outer sleeve 11 with the pad holder 7, which could be guided in the caliper 1 or the carrier, as can be exemplarily seen in Fig. 4.

Since the outer sleeve 11 is non-rotatably guided, a rotation of the inner sleeve 10 will axially displace the outer sleeve 11 towards the brake disc so as to compensate the clearance which exists due to the wear at the brake pad 8.

As can be seen from Fig. 1 and 2, the outer sleeve 11 is not guided with its outer circumference in an opening 14 of the caliper 1 facing the brake disc, rather there exists a radial distance circumferentially between the outer sleeve 11 and the caliper housing.

It becomes apparent that if the guidance of the outer sleeve 11 by the pad holder 7 will be disintegrated, e.g. during replacement of the pad 8 or any other service handlings, the outer sleeve 11 would be free to rotate, if so during manual operations. However, excessive rotation of the outer sleeve 11 relative to the inner sleeve 10 should be avoided in any case.

Therefore, the invention provides means which are adapted to interfere with the relative motion between the elements 10 and 11 so as to prevent any rotational movements or at least limit such movements up to a certain range.

In the embodiment as shown in Figs. 1 and 2, such means comprise a protection bellow 15, which is arranged between the outer circumference of the outer sleeve 11 and the inside of the housing of the caliper 1. The protection bellow 15 is able to move with the outer sleeve 11 in axial direction.

According to the invention, the protection bellow 15 is configured in such a way so as to provide a resistance to rotational movements of the outer sleeve 11 relative to the caliper 1 in general.

This can be achieved by defining the elasticity properties of the bellow 15 in a suitable way by the inclusion of fibres 16 into the elastic material of the bellow 15, which could be made of metal or carbon. The fibres 16 lead to a reinforcement of the bellow 15 which thereby provides a certain degree of resistance in rotational direction but still enabling axial flexibility.

The reinforced protection bellow 15 is arranged and configured so as to limit the rotation of the outer sleeve 11 in the event that the non-rotatable guidance of the outer sleeve 11 is completely disintegrated especially during and after disassembly of the disc brake or of components of it, in particular of the brake pad 8 or the pad holder 7.

Furthermore, according to the invention, the reinforced protection bellow 15 is also configured and arranged so as to provide the non-rotatable guidance for the outer sleeve 11 directly, i.e. during brake actuation and release. In other words, the bellow 15 could serve both as the means to non-rotatably guide the outer sleeve 11 in the operational use condition of the disc brake and to limit or to prevent any rotation of the outer sleeve 11 during servicing and dismounting of the disc brake.

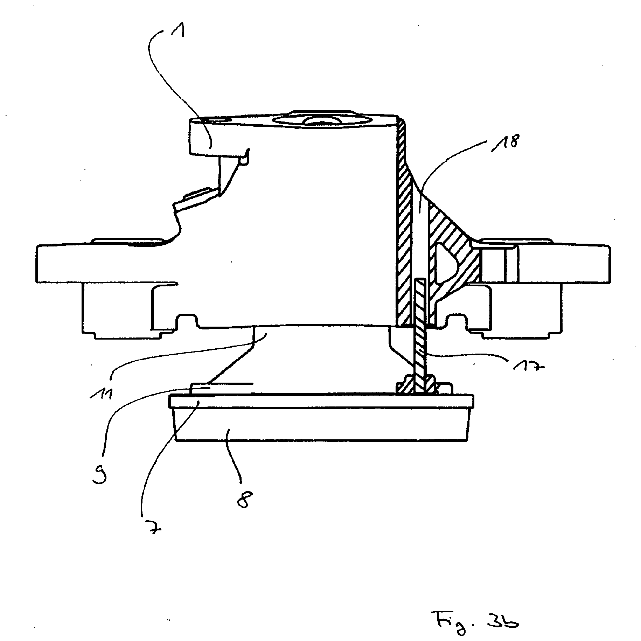

Figs. 3a and 3b illustrate a second embodiment of the disc brake according to the invention, in which schematically the caliper 1 and the front end of the brake actuation mechanism 2 are shown.

In this embodiment, the pressure plate 9 is integrally formed with the front end of the outer sleeve 11 which is facing the brake disc. The pressure plate 9 is detachably connected to the pad holder 7 of the inner brake pad 8. On the side opposite of the brake pad 8, the pressure plate 9 comprises a guidance element which is made as a pin 17 protruding axially away from the pressure plate 9. The pin 17 is cooperating with a corresponding guidance element arranged at the caliper 1, namely a longitudinal hole 18, which is able to receive the pin 17 in a sliding manner.

On the one hand, the pin 17 such guided in the hole 18 hinders the outer sleeve 11 from rotating and on the other hand provides axial, non-rotatable guidance for the outer sleeve 11.

Fig. 3b exemplarily illustrates that the pin 17 can be guided in the hole 18 with a defined clearance. Such clearance still allows minor rotational or tilting movements of the outer sleeve 11, which might be necessary in order to provide some handling ease. In addition, such clearance would leave the guidance function to any other means during brake actuation and release, e.g. such as the pad holder 7.

Another embodiment of the disc brake according to the invention is shown in the cross section of Fig. 4.

The pressure plate 9 comprises a support element 19 on the side opposite of the brake pad 8, onto which support element 19 a tubular element 20 is screwed such that the tubular element 20 is protruding in axial direction away from the pressure plate 9.

The tubular element 20 itself is slideably guided on a pin 21 arranged in the caliper 1. As can be seen from the Fig. 4, the cooperation between the tubular element 20 and the pin 21 provides a rotation limitation for the outer sleeve 11, as soon as the outer sleeve 11 is not guided in a non-rotatable manner anymore, i.e. when the pressure plate 9 is not connected to the pad holder 7 which in operation is guided on the caliper 1.

This embodiment has the advantage that the tubular element 20 can serve as support for a reference body 22 for sensing the wear by means of a pad wear sensor. Moreover, the pin 21 can already form part of such a pad wear sensor and could be introduced into the caliper 1 from the rear side of it.

The disc brake shown in Fig. 4 comprises a resetting device 23. The resetting device 23 is meshing with a ring gear 24 arranged on the rear outer end of the inner sleeve 10 in order to reset the position of the thrust element 6 after the pads have been replaced.

Basically, the resetting device 23 consists of a reset axle 25 which is inclined relative to the axis of the central rod 12. The reset axle 25 carries a conical pinion 26. The ring gear 24 is fixed on the inner sleeve 10 and is furnished with large enough clearance between its teeth and the teeth of the conical pinion 26 in order to allow axial sliding of the ring gear 24 together with the inner sleeve 10 without jamming of the teeth. Alternatively, the ring gear 24 could be axially fixed relative to the caliper 1 and be adapted to slide axially on the outer circumference of the inner sleeve 10. The resetting device 23, which could be manually or mechanically operated, may be assembled to the caliper 1 from the rear side of it.

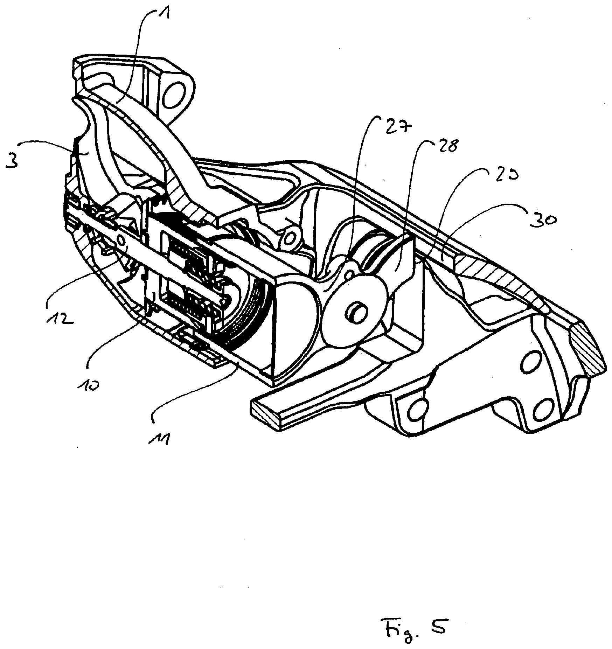

In Fig. 5 another embodiment of the disc brake according to the invention is shown.

As can be seen, the outer sleeve 11 comprises a pressure plate 27 which is integrally formed with the cylindrical body of the sleeve 11 on the front end facing the brake disc. The pressure plate 27 comprises, ideally on both sides radially opposed to each other, a bar 28 with a guiding surface 29, respectively.

The guiding surface 29 is slideably guided on a counter guiding surface 30 of the caliper 1. Thereby, the outer sleeve 11 is prevented from rotating when the pressure plate 27 has lost its contact with the pad holder 7 of the inner brake pad 8.

As becomes obvious from the afore-described different embodiments of the disc brake according to the invention, the means which are able to interfere with the relative motion between the sleeves 10 and 11 for limiting the rotation of the outer sleeve 11 at disc brake disassembly on the one hand and for, if applicable, providing non-rotatable guidance of the outer sleeve 11 during braking and release in fact reduce the risk of damages of the entire brake actuation mechanism 2 due to excessive rotation.

Further, these means reduce the risk of blocking when the mechanism has to be manually operated, which, furthermore, enable a manual reset of the adjustment part of the brake actuation mechanism 2 after pad replacement in a more reliable way. All embodiments are designed in a simple manner and therefore can be easily and cost-effectively installed. Furthermore, in particular, the embodiments according to Fig. 3a, 3b and 4 enable an easy installation and use of pad wear sensors.

## Claims

1. Disc brake comprising a caliper (1) embedding at least one brake disc and a brake actuation mechanism (2) with a thrust element (6) for transferring a clamping force to a brake disc via a brake pad (8), the thrust element (6) comprising at least one rotatable element (10) and an element (11) cooperating with said rotatable element (10) in such a way so that a relative motion between said rotatable element (10) and said element (11) is enabled in order to provide clearance adjustment at the brake pad (8), whereas said element (11) is connected to the brake pad (8) via a pressure plate (9;27) and whereas said element (11) is non-rotatably guided during brake actuation and release, further comprising means (15) configured and arranged to be able to interfere with said relative motion so as to limit rotation of the element (11) when the non-rotatable guidance of said element (11) is completely disintegrated during and after disassembly of the disc brake or components of it,
**characterized in that**
said means comprises a protection bellow (15) arranged between said element (11) and the caliper (1), said protection bellow (15) is being reinforced in that it is made of elastic material and armoured with fibres (16), the incorporation and orientation of which in said elastic material is selected to define the overall torsion elasticity and rolling elasticity in linear axial direction of said protection bellow (15) for providing a defined resistance against rotations of said element (11).

2. Disc brake according to claim 1, in which the fibres (16) are made of metal, carbon, polymer or similar.

3. Disc brake comprising a caliper (1) embedding at least one brake disc and a brake actuation mechanism (2) with a thrust element (6) for transferring a clamping force to a brake disc via a brake pad (8), the thrust element (6) comprising at least one rotatable element (10) and an element (11) cooperating with said rotatable element (10) in such a way so that a relative motion between said rotatable element (10) and said element (11) is enabled in order to provide clearance adjustment at the brake pad (8), whereas said element (11) is connected to the brake pad (8) via a pressure plate (9; 27) and whereas said element (11) is non-rotatably guided during brake actuation and release, further comprising means (17, 18; 20, 21; 28, 29, 30) configured and arranged to be able to interfere with said relative motion so as to limit rotation of the element (11) when the non-rotatable guidance of said element (11) is completely disintegrated during and after disassembly of the disc brake or components of it,
said means comprises at least one element (17; 20; 28, 29) attached to the pressure plate (9;27) which cooperates with at least one element (18; 21; 30) arranged at the caliper (1) or a carrier supporting the caliper (1), **characterized in that**
in which the pressure plate (9;27) comprises a guidance element (17; 20; 28, 29) which is adapted to be guided by a guidance element (18; 21; 30) of the caliper (1) or the carrier, in which the guidance elements (17; 20; 28; 29; 18; 21; 30) are configured to only enable linear sliding in the axial direction of the brake disc, so as to also serve to limit any rotation of the element (11) when the pressure plate (9;27) is not in force transmitting contact with the brake pad (8).

4. Disc brake according to claim 3, in which the guidance element of the pressure plate (9) comprises a pin (17) protruding from the pressure plate (9) on the side opposite of the brake disc, which pin (17) is adapted to be received in a guidance hole (18) arranged in the caliper (1) or in the carrier.

5. Disc brake according to claim 3, in which the guidance element of the pressure plate (9) comprises a tubular element (20) protruding from the pressure plate (9) on the side opposite of the brake disc, which tubular element (20) is adapted to receive a pin (21) arranged in the caliper (1) or in the carrier.

6. Disc brake according to claim 4 or 5, in which the guidance element (17; 20) of the pressure plate (9) is adapted to serve as a reference body or to provide support for a reference body (22) for a pad wear sensor arranged in the caliper (1) or in the carrier.

7. Disc brake according to claim 3, in which the pressure plate (27) comprises at least one bar (28) extending laterally from the pressure plate (27), which bar (28) comprises a guiding surface (29) which is adapted to be guided on a counter guiding surface (30) of the caliper (1) or of the carrier.

8. Disc brake according to claim 7, in which the pressure plate (27) with the at least one bar (28) is integral with the element (11).

9. Disc brake according to 1 or 2, in which the means (15) are configured for limiting a rotation up to a defined threshold torque.

10. Disc brake according to one of the preceding claims, in which the element (10) and the element (11) of the thrust element (6) are configured as sleeves in coaxial threaded engagement around a central rod (12), which mounts the brake actuation mechanism (2) in the caliper (1).

## Patentansprüche

1. Scheibenbremse aufweisend einen Bremssattel (1), der zumindest eine Bremsscheibe übergreift, und einen Bremsmechanismus (2) mit einem Druckelement (6) zum Aufbringen einer Klemmkraft auf eine Bremsscheibe mittels eines Bremsklotzes (8), wobei das Druckelement (6) zumindest ein drehbares Element (10) und ein Element (11) aufweist, das mit dem drehbaren Element (10) in solcher Art und Weise zusammenwirkt, dass eine relative Bewegung zwischen dem drehbaren Element (10) und dem Element (11) ermöglicht wird, um eine Lüftspieleinstellung an dem Bremsklotz (8) zur Verfügung zu stellen, wobei das Element (11) mit dem Bremsklotz (8) mittels einer Druckplatte (9;27) verbunden ist und wobei das Element (11) während der Bremsbetätigung und Bremslösung nicht drehbar geführt ist, des Weiteren aufweisend Mittel (15), die ausgebildet und angeordnet sind, so dass sie in der Lage sind, die relative Bewegung zu behindern, so dass die Drehung des Elements (11) eingeschränkt wird, wenn die nicht-drehbare Führung des Elements (11) während und nach der Demontage der Scheibenbremse oder von deren Komponenten vollständig aufgehoben ist,
**dadurch gekennzeichnet, dass**
die Mittel einen Schutzbalg (15) aufweisen, der zwischen dem Element (11) und dem Bremssattel (1) angeordnet ist, wobei der Schutzbalg (15) verstärkt ist, so dass er aus einem elastischen Material hergestellt und mit Fasern (16) bewehrt ist, deren Einbettung und Ausrichtung in dem elastischen Material gewählt ist, um eine gesamte Torsionselastizität und Abrollelastizität in linearer Axialrichtung des Schutzbalgs (15) zu definieren, um den Drehungen des Elements (11) einen definierten Widerstand entgegen zu setzen.

2. Scheibenbremse nach Anspruch 1, bei welcher die Fasern (16) aus Metall, Karbon, Polymer oder Ähnlichem hergestellt sind.

3. Scheibenbremse aufweisend einen Bremssattel (1), der zumindest eine Bremsscheibe übergreift, und einen Bremsmechanismus (2) mit einem Druckelement (6) zum Aufbringen einer Klemmkraft auf eine Bremsscheibe mittels eines Bremsklotzes (8), wobei das Druckelement (6) zumindest ein drehbares Element (10) und ein Element (11) aufweist, das mit dem drehbaren Element (10) in solcher Art und Weise zusammenwirkt, dass eine relative Bewegung zwischen dem drehbaren Element (10) und dem Element (11) ermöglicht wird, um eine Lüftspieleinstellung an dem Bremsklotz (8) zur Verfügung zu stellen, wobei das Element (11) mit dem Bremsklotz (8) mittels einer Druckplatte (9;27) verbunden ist und wobei das Element (11) während der Bremsbetätigung und Bremslösung nicht drehbar geführt ist, des Weiteren aufweisend Mittel (17, 18; 20, 21; 28, 29, 30), die ausgebildet und angeordnet sind, so dass sie in der Lage sind, die relative Bewegung zu behindern, so dass die Drehung des Elements (11) eingeschränkt wird, wenn die nicht-drehbare Führung des Elements (11) während und nach der Demontage der Scheibenbremse oder von deren Komponenten vollständig aufgehoben ist, wobei die Mittel zumindest ein Element (17; 20; 28, 29) aufweisen, welches an der Druckplatte (9; 27) angebracht ist, welches mit zumindest einem Element (18;21;30) zusammenwirkt, das an dem Bremssattel (1) oder an einem Träger, der den Bremssattel (1) trägt, angebracht ist,
**dadurch gekennzeichnet, dass**
die Druckplatte (9; 27) ein Führungselement (17; 20; 28, 29) aufweist, welches ausgelegt ist, um durch ein Führungselement (18; 21; 30) des Bremssattels (1) oder des Trägers geführt zu werden,
wobei die Führungselemente (17; 20; 28; 29; 18; 21; 30) ausgebildet sind, nur ein lineares Gleiten in der Axialrichtung der Bremsscheibe zu gestatten, um so auch dazu zu dienen, jede Drehung des Elements (11) zu begrenzen, wenn sich die Druckplatte (9;27) nicht in einem kraftübertragenden Kontakt mit dem Bremsklotz (8) befindet.

4. Scheibenbremse nach Anspruch 3, bei welcher das Führungselement der Druckplatte (9) einen Stab (17) aufweist, der von der Druckplatte (9) an der der Bremsscheibe gegenüberliegenden Seite abragt, wobei der Stab (17) ausgelegt ist, um durch ein in dem Bremssattel (1) oder in dem Träger angeordnetes Führungsloch (18) aufgenommen zu werden.

5. Scheibenbremse nach Anspruch 3, bei welcher das Führungselement der Druckplatte (9) ein rohrförmiges Element (20) aufweist, das von der Druckplatte (9) an der der Bremsscheibe gegenüberliegenden Seite abragt, wobei das rohrförmige Element (20) ausgelegt ist, um einen in dem Bremssattel (1) oder in dem Träger angeordneten Stab (21) aufzunehmen.

6. Scheibenbremse nach Anspruch 4 oder 5, bei welcher das Führungselement (17;20) der Druckplatte (9) ausgelegt ist, um als ein Referenzkörper zu dienen oder um eine Halterung für einen Referenzkörper (22) für einen Bremsbelagssensor zur Verfügung zu stellen, der in dem Bremssattel (1) oder in dem Träger angeordnet ist.

7. Scheibenbremse nach Anspruch 3, bei welcher die Druckplatte (27) zumindest eine Strebe (28) aufweist, die sich seitlich von der Druckplatte (27) erstreckt, wobei die Strebe (28) eine Führungsfläche (29) aufweist, die ausgelegt ist, um an einer Führungsgegenfläche (30) des Bremssattels (1) oder des Trägers geführt zu werden.

8. Scheibenbremse nach Anspruch 7, bei welcher die Druckplatte (27) mit der zumindest einen Strebe (28) integral mit dem Element (11) ausgebildet ist.

9. Scheibenbremse nach Anspruch 1 oder 2, bei welcher die Mittel (15) ausgebildet sind, um eine Drehung bis zu einem definierten Grenzdrehmoment zu begrenzen.

10. Scheibenbremse nach einem der vorhergehenden Ansprüche, bei welcher das drehbare Element (10) und das Element (11) des Druckelements (6) als Hülsen in einem koaxialen Gewindeeingriff um einen zentralen Stab (12) ausgebildet sind, der den Bremsbetätigungsmechanismus in dem Bremssattel (1) montiert.

## Revendications

1. Frein à disque comprenant un étrier (1) intégrant au moins un disque de frein et un mécanisme d'actionnement de frein (2) avec un élément de poussée (6) destiné à transférer une force de serrage à un disque de frein par l'intermédiaire d'une plaquette de frein (8), l'élément de poussée (6) comprenant au moins un élément rotatif (10) et un élément (11) coopérant avec ledit élément rotatif (10) de manière à ce qu'un mouvement relatif entre ledit élément rotatif (10) et ledit élément (11) soit permis afin de fournir un réglage de jeu au niveau de la plaquette de frein (8), tandis que ledit élément (11) est relié à la plaquette de frein (8) par l'intermédiaire d'un plateau de pression (9; 27) et tandis que ledit élément (11) est guidé sans possibilité de rotation pendant l'actionnement et le relâchement du frein, comprenant en outre un moyen (15) configuré et agencé pour pouvoir interférer avec ledit mouvement relatif de façon à limiter la rotation de l'élément (11) lorsque le guidage sans possibilité de rotation dudit élément (11) est totalement empêché pendant et après le démontage du frein à disque ou de composants de celui-ci,
**caractérisé en ce que**
ledit moyen comprend un soufflet de protection (15) agencé entre ledit élément (11) et l'étrier (1), le soufflet de protection (15) étant renforcé par sa réalisation en matériau élastique armé de fibres (16), l'incorporation et l'orientation des fibres dans ledit matériau élastique étant sélectionnées pour définir l'élasticité de torsion globale et l'élasticité de roulement dans la direction axiale linéaire dudit soufflet de protection (15), pour apporter une résistance définie aux rotations dudit élément (11).

2. Frein à disque selon la revendication 1, dans lequel les fibres (16) sont constituées de métal, carbone, polymère ou similaire.

3. Frein à disque comprenant un étrier (1) intégrant au moins un disque de frein et un mécanisme d'actionnement de frein (2) avec un élément de poussée (6) destiné à transférer une force de serrage à un disque de frein par l'intermédiaire d'une plaquette de frein (8), l'élément de poussée (6) comprenant au moins un élément rotatif (10) et un élément (11) coopérant avec ledit élément rotatif (10) de manière à ce qu'un mouvement relatif entre ledit élément rotatif (10) et ledit élément (11) soit permis afin de fournir un réglage de dégagement à la plaquette de frein (8), tandis que ledit élément (11) est relié à la plaquette de frein (8) par l'intermédiaire d'un plateau de pression (9; 27) et tandis que ledit élément (11) est guidé sans possibilité de rotation pendant l'actionnement et le relâchement du frein, comprenant en outre des moyens (17, 18 ; 20, 21 ; 28, 29, 30) configurés et agencés pour pouvoir interférer avec ledit mouvement relatif de façon à limiter la rotation de l'élément (11) lorsque le guidage sans possibilité de rotation dudit élément (11) est totalement empêché pendant et après le démontage du frein à disque ou de composants de celui-ci,
ledit moyen comprend au moins un élément (17; 20 ; 28,29) relié au plateau de pression (9 ; 27) qui coopère avec au moins un élément (18 ; 21 ; 30) agencé au niveau de l'étrier (1) ou d'un support supportant l'étrier (1). **caractérisé en ce que**
le plateau de pression (9 ; 27) comprend un élément de guidage (17 ; 20 ; 28 ; 29) qui est conçu pour être guidé par un élément de guidage (18 ; 21 ; 30) de l'étrier (1) ou du support, dans lequel les élément de guidages (17 ; 20 ; 28 ; 29 ; 18 ; 21 ; 30) sont configurés pour permettre uniquement un coulissement linéaire dans la direction axiale du frein à disque, de manière à servir également à limiter toute rotation de l'élément (11) lorsque le plateau de pression (9 ; 27) n'est pas en contact de transmission de force avec la plaquette de frein (8).

4. Frein à disque selon la revendication 3, dans lequel l'élément de guidage du plateau de pression (9) comprend une goupille (17) dépassant du plateau de pression (9) sur le côté opposé du disque de frein, laquelle goupille (17) est conçue pour être reçue dans un trou de guidage (18) ménagé dans l'étrier (1) ou dans le support.

5. Frein à disque selon la revendication 3, dans lequel l'élément de guidage du plateau de pression (9) comprend un élément tubulaire (20) dépassant du plateau de pression (9) sur le côté opposé du disque de frein, lequel élément tubulaire (20) est conçu pour recevoir une goupille (21) agencée dans l'étrier (1) ou dans le support.

6. Frein à disque selon la revendication 4 ou 5, dans lequel l'élément de guidage (17 ; 20) du plateau de pression (9) est conçu pour servir de corps de référence ou pour fournir un support à un corps de référence (22) pour un capteur d'usure de plaquette agencé dans l'étrier (1) ou dans le support.

7. Frein à disque selon la revendication 3, dans lequel le plateau de pression (27) comprend au moins une barre (28) s'étendant latéralement depuis le plateau de pression (27), laquelle barre (28) comprend une surface de guidage (29) qui est conçue pour être guidée sur une surface de contre-guidage (30) de l'étrier (1) ou du support.

8. Frein à disque selon la revendication 7, dans lequel la plaque de pression (27) avec la au moins une barre (28) sont solidaires de l'élément (11).

9. Frein à disque selon la revendication 1 ou 2, dans lequel les moyens (15) sont configurés pour limiter une rotation jusqu'à un couple de seuil défini.

10. Frein à disque selon l'une des revendications précédentes, dans lequel l'élément rotatif (10) et l'élément (11) de l'élément de poussée (6) sont configurés sous forme de manchons dans l'engagement taraudé coaxial autour d'une tige centrale (12), qui fixe le mécanisme d'actionnement de frein (2) dans l'étrier (1).
